(19) **Europäisches Patentamt**
**European Patent Office**
**Office européen des brevets**

(11) **EP 2 782 304 B1**

(12) **EUROPEAN PATENT SPECIFICATION**

(45) Date of publication and mention
of the grant of the patent:
**22.06.2016  Bulletin 2016/25**

(51) Int Cl.:
*H04L 25/03* (2006.01)          *H04L 27/26* (2006.01)

(21) Application number: **13159897.1**

(22) Date of filing: **19.03.2013**

(54) **METHOD FOR EQUALIZING FILTERBANK MULTICARRIER (FBMC) MODULATIONS**

VERFAHREN ZUM ANGLEICHEN VON FBMC-MODULATIONEN

PROCÉDÉ D'ÉGALISATION DE MODULATIONS DE MULTIPORTEUSE EN BANC DE FILTRES
(FBMC)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.09.2014  Bulletin 2014/39**

(73) Proprietor: **Fundació Centre Tecnologic de
Telecomunicacions de Catalunya
08860 Castelldefels (Barcelona) (ES)**

(72) Inventors:
 • **Mestre Pons, Francesc, Xavier
  08860 Castelldefels (Barcelona) (ES)**
 • **Majoral Ramoneda, Marc
  08860 Castelldefels (Barcelona) (ES)**
 • **Pfletschinger, Stephan
  08860 Castelldefels (Barcelona) (ES)**

(74) Representative: **Carpintero Lopez, Francisco et al
Herrero & Asociados, S.L.
C/Alcalá 35
28014 Madrid (ES)**

(56) References cited:
 • **MAURICE BELLANGER: "FS-FBMC: An
  alternative scheme for filter bank based
  multicarrier transmission", COMMUNICATIONS
  CONTROL AND SIGNAL PROCESSING (ISCCSP),
  2012 5TH INTERNATIONAL SYMPOSIUM ON,
  IEEE, 2 May 2012 (2012-05-02), pages 1-4,
  XP032188167, DOI:
  10.1109/ISCCSP.2012.6217776 ISBN:
  978-1-4673-0274-6**
 • **DEISE MONQUELATE ARNDT ET AL:
  "Performance comparison between OFDM and
  FBMC systems in Digital TV transmission",
  COMMUNICATIONS (LATINCOM), 2011 IEEE
  LATIN-AMERICAN CONFERENCE ON, IEEE, 24
  October 2011 (2011-10-24), pages 1-6,
  XP032076875, DOI:
  10.1109/LATINCOM.2011.6107415 ISBN:
  978-1-4673-0277-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 782 304 B1

**Description**

FIELD OF THE INVENTION

The present invention relates to a method for signal equalization in filterbank based multicarrier communications, which is especially useful in communications through highly frequency selective channels.

STATE OF THE ART

Filterbank multicarrier (FBMC) modulations have been proposed as spectrally efficient alternatives to the classical cyclic prefix orthogonal frequency-division multiplexing (CP-OFDM) modulation. Two are the main advantages of FBMC modulations with respect to OFDM: on the one hand, they do not require the presence of a cyclic prefix; on the other, they can be combined with pulse shaping, which guarantees a well-localized spectral occupancy and prevents out-of-band emissions. These two features result in a much more efficient multicarrier modulation, which makes better use of the available spectral resources.

Unfortunately FBMC modulations present an important drawback that has traditionally prevented their widespread application in wireless scenarios, namely their lack of robustness against channel frequency selectivity [B. L. Floch, M. Alard, and C. Berrou, "Coded orthogonal frequency division multiple," Proceedings of the IEEE, vol. 83, pp. 982 - 996, 1995]. It is well known that multipath generates inter-symbol and inter-carrier interference at the receiver, and this effect cannot be compensated by single tap per-subcarrier equalizers (as it is the case in traditional OFDM).

So far, a lot of research has been devoted to the study of specific equalization techniques for different filterbank multicarrier architectures, see e.g. [T. Ihalainen, T. H. Stitz, M. Rinne, and M. Renfors, "Channel equalization in filter bank based multicarrier modulation for wireless communications," EURASIP Journal on Advances in Signal Processing, vol. 2007, pp. 1-18, 2007.], [H. Lin, C. Lele, and P. Siohan, "Equalization with interference cancellation for hermitian symmetric OFDM/OQAM system", in Proceedings of the IEEE International Symposium on Power Line Communications and Its Applications, ISPLC 2008., pp. 363 - 368], [L. Baltar, D. Waldhauser, and J. Nossek, "MMSE subchannel decision feedback equalization for filter bank based multicarrier system", in Proceedings of the IEEE International Symposium on Circuits and Systems, ISCAS 2009., 2009, pp. 2802 - 2805] or [P. Siohan, C. Siclet, and N. Lacaille, "Analysis and design of OFDM/OQAM systems based on filterbank theory", IEEE Transactions on Signal Processing, vol. 50, no. 5, pp. 1170-1183, May 2002.]. However, most of all current transceivers for filterbank-based multicarrier (FBMC) modulations obviate this distortion and simply act as if perfect reconstruction conditions were always met. Here, we propose an equalizer that effectively overcomes the limitations of current filterbank equalizers.

The equalization of FBMC signals is a topic that has been extensively explored in the literature. Classical approaches have been based on the direct application of traditional equalization schemes to the FBMC signal model in its full the time-frequency generality: linear filtering schemes in the time-frequency domain [S. Sandberg and M. Tzannes, "Overlapped discrete multitone modulation for high speed copper wire communications", IEEE Journal on Selected Areas in Communications, vol. 13, no. 9, pp. 1571-1585, Dec. 1995], [T.Wiegand and N. Fliege, "Equalizers for transmultiolexers in orthogonal multiple carrier data transmission", in Proceedings of the European Signal Processing Conference, Trieste, Italy, 1996], [B. Farhang-Boroujeny and L. Lin, "Analysis of post-combiner equalizers in cosine-modulated filterbank-based transmultiplexer systems", IEEE Transactions on Signal Processing, vol. 51, no. 12, pp. 3249-3262, Dec. 2003.], fractionally spaced linear and decision feedback equalizers at the input of the receiver [L. Vandendorpe, L. Cuvelier, F. Deryck, J. Louveaux, and O. van de Wiel, "Fractionally spaced linear and decision-feedback detectors for transmultiplexers", IEEE Transactions on Signal Processing, vol. 46, no. 4, pp. 996-1010, Apr. 1998], decision feedback prior to detection [H. Lin, C. Lélé, and P. Siohan, "Equalization with interference cancellation for hermitian symmetric OFDM/OQAM systems", in Proceedings of the IEEE International Symposium on Power Line Communications and Its Applications, 2008, pp. 363 - 368], among others. These approaches typically suffer from a high computational complexity due to the fact that the signal must be processed or filtered along both time and frequency domains. To overcome this, more recent studies have proposed per-subcarrier equalization, based on banks of filters independently operating at each subcarrier but usually designed by taking into account the effect of adjacent subcarriers [T. Ihalainen, T. H. Stitz, M. Rinne, and M. Renfors, "Channel equalization in filter bank based multicarrier modulation for wireless communications", EURASIP Journal on Advances in Signal Processing, vol. 2007, pp. 1-18, 2007], [D. Waldhauser, L. Baltar, and J. Nossek, "MMSE subcarrier equalization for filter bank based multicarrier systems", in Proceedings of the IEEE 9th Workshop on Signal Processing Advances in Wireless Communications, 2008, pp. 525 - 529], [L. Baltar, D. Waldhauser, and J. Nossek, "MMSE subchannel decision feedback equalization for filter bank based multicarrier systems", in Proceedings of the IEEE International Symposium on Circuits and Systems, ISCAS 2009., pp. 2802 - 2805], [S. Nedic and N. Popovic, "Per-bin DFE for advanced OQAM-based multi-carrier wireless data transmission systems", in Proceedings of the International Zurich Seminar on Broadband Communications, 2002, pp. 38-1 - 38-6].

The document

D1    MAURICE BELLANGER: "FS-FBMC: An alternative scheme for filter bank based multicarrier transmission", COMMUNICATIONS CONTROL AND SIGNAL PROCESSING (ISCCSP), 2012 5TH INTERNATIONAL SYMPOSIUM ON, IEEE, 2 May 2012 (2012-05-02), pages 1-4, XP032188167, DOI: 10.1109/ISCCSP.2012.6217776 ISBN: 978-1-4673-0274-6

discloses a frequency spreading FBMC (FS-FBMC) which is based on the FFT. It offers an alternative approach to the implementation of FBMC, exploiting the frequency domain options.

These approaches are much more affordable from the computational point of view but are inherently suboptimal because they do not consider the full structure of the time-frequency signal model.

SUMMARY OF THE INVENTION

It is a first object of the present invention to provide a method for equalizing filterbank based multicarrier modulations (FBMC) signals, characterised in that it comprises the steps of:

a.- serial-to-parallel converting the received signal at a serial-to-parallel converter into a first plurality (M) of parallel streams of subcarriers;

b.- processing each subcarrier of the first plurality (M) of parallelized subcarrier signals by a plurality (K) of parallel filterbanks; and

c.- weighting the output of said K parallel filterbanks with weights in order to form a new set of M signals.

According to a further feature of the present invention, the said processing of the subcarrier signals is performed using a successive time-domain derivative of an original filter in each corresponding filterbank, hereinafter referred to as "prototype".

In an embodiment of the present invention, the parallel filterbanks are constructed using an approximation to the time-domain derivatives of the original prototype.

Preferably, each filterbank is constructed using a polyphase network employing an FFT or IFFT operation.

According to another feature of the present invention, the method comprises the step of further processing and/or equalizing the signals that result after combining the outputs of the K parallel filterbanks. The said equalization associated with a subcarrier my consists of: a filtering operation; a single tap multiplication by an appropriate weight; and/or a single tap multiplication by the inverse of the channel frequency response at the subcarrier frequency.

In the latter case, weights used to combine the output from the K parallel filterbanks (422, 422', 422",...) of the M signals in each one is fixed for one filterbank and is allocated a value defined by the expression:

$$a_k(m) = -\frac{1}{H(f_m)} \sum_{r=0}^{k-1} \frac{(-j)^{k-r}}{(k-r)!} H^{(k-r)}(f_m) a_r(m)$$

for the generic $k^{th}$ filterbank, wherein $H(f_m)$ denotes the channel frequency response at the $m^{th}$ subcarrier frequency, and $H^{(k)}(f_m)$ denotes the $k^{th}$ frequency domain derivative of the channel response at the $m^{th}$ subcarrier frequency.

Here, $H(f_m)$ and $H^{(k)}(f_m)$, k=1,...,K may be replaced by estimations or approximations thereof. The m subcarrier output of the $k^{th}$ filterbank can be multiplied by the weight $a_k(m)$, k=1,...,K, m=1,..,M, and where the resulting signals are added on a per-subcarrier basis.

According to an embodiment, the plurality (K) of parallel filterbanks is fixed beforehand according to the channel frequency response.

The present invention is able to overcome traditional equalizing methods (either based on per-subcarrier FIR equalization or based on linear filtering schemes in the time-frequency domain) achieving a substantial reduction in both computational complexity and output distortion power.

As it is stated, the proposed method of FBMC signal equalization comprises the processing of the received in a number of parallel filterbanks, this number being hereinafter denoted by "K". Each stage operates independently in parallel and basically filters the input signal using a filterbank constructed from the derivatives of the original receive prototype pulse in the time domain. The output of all these stages is then downconverted (e.g. transformed via FFT/IFFT) and properly combined at the subcarrier level. The propose architecture is able to recover the distortion-free signal up to a very small error, much lower than the error achieved by other traditional FBMC equalization methods.

The proposed method for equalizing the FBMC signal comprises the steps of: receiving a signal and distribute it into K parallel stages; processing the signal at each parallel stage by a stage-specific filterbank; downconverting the signal at each parallel stage; combining the signals at the K stages using an appropriate set of weights and optionally applying a traditional FBMC equalizer.

The present invention also provides a system which comprises means adapted for carrying out the steps of the method, as well as a computer program comprising computer program code means adapted to perform the steps of the method when said program is run on a computer, a digital signal processor, a field-programmable gate array, an application-specific integrated circuit, a micro-processor, a micro-controller, or any other form of programmable hardware.

According to a second object of the present invention, it is disclosed a computer program comprising computer program code means adapted to perform the steps of the aforesaid method when said program is run on a computer, a digital signal processor, a field-programmable gate array, an application-specific integrated circuit, a micro-processor, a micro-controller, or any other form of programmable hardware.

The advantages of the proposed invention will become apparent in the description that follows.

BRIEF DESCRIPTION OF THE DRAWINGS

To complete the description and in order to provide for a better understanding of the method of the present invention, a set of attached drawings is provided. Said drawings form an integral part of the description and illustrate a preferred embodiment of the invention, which should not be interpreted as restricting the scope of the invention, but just as an example of how the invention can be embodied. In the attached drawings:

Fig. 1 shows a block diagram of the typical communication scenario where the present invention could be applied to;

Fig. 2 shows a block diagram of a preferred embodiment of the filterbank based multicarrier communications (FBMC) modulator of Fig. 1 according to the present invention;

Fig. 3 shows the typical structure of the filterbank, constructed from a prototype filter P(f), shown in Fig. 2;

Fig. 4 represents the spectral response of the multiple parallel symbol streams at the output of the filterbank based multicarrier communications (FBMC) modulator and approximate response to a frequency selective channel, according to the present invention;

Fig. 5 shows a block diagram of the conventional FBMC demodulator, according to the prior art.

Fig. 6 shows a block diagram of the proposed FBMC demodulator of Fig. 1, according to the present invention; and

Fig. 7 is a graphic that shows the performance of an equalizer according to the present invention, in terms of symbol error rate as a function of the signal to noise ratio for different values of the number of parallel stages.

DESCRIPTION OF PREFERRED EMBODIMENTS OF THE INVENTION

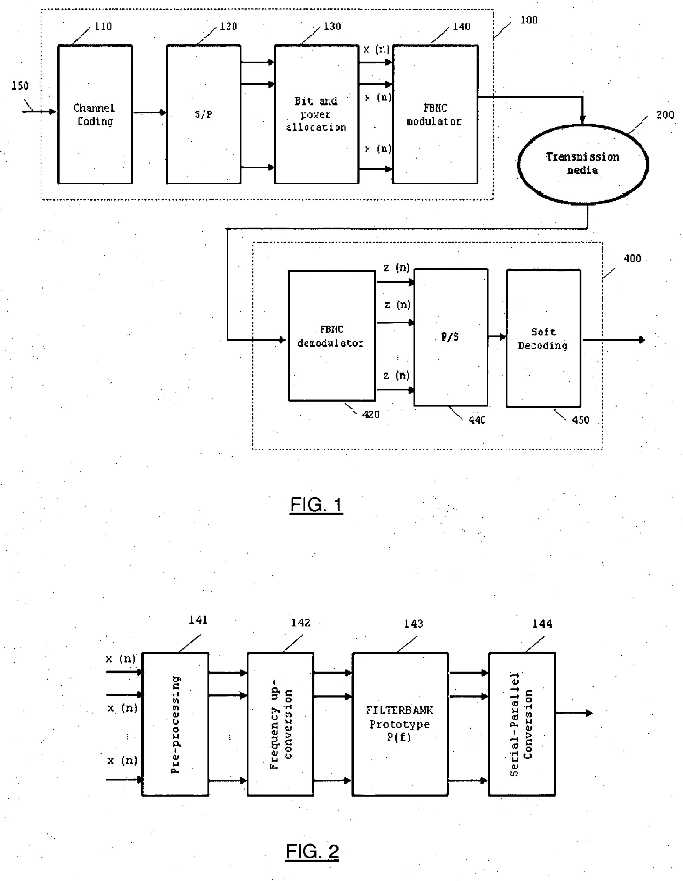

The implementation of the present invention can be carried out according to the setting illustrated in Fig. 1:

1. At the input of a transmitter (100), a stream of bits (150) is coded according to some codebook (110) and then serial-to-parallel converted into M different branches at the S/P converter (120).

2. For each of these M branches, the bit stream is mapped into a sequence of complex symbols obtained from a certain constellation at a mapping block (130). The selected constellation may be different for each branch, and the null constellation can also be used (in which case, no bit is allocated to a particular branch). In addition, each symbol stream is weighted with some amplification factor which may be different at each branch. The decision on which constellation and power factor is used for each of the M branches is made according to some channel state information that is obtained at the receiver.

3. The M parallel symbol streams obtained in the previous operation $(x_1(n),...,x_M(n))$ are then modulated according to a filterbank multicarrier (FBMC) modulation at FBMC modulator (140) and the resulting signal is sent through a transmission media (200).

4. At the receiver (400), the inverse operations are carried out. First, the signal is demodulated at FBMC demodulator (420) into M parallel symbol streams $(y_1(n),...,y_M(n))$ which under ideal conditions would coincide with the original

symbol stream $x_1(n),...,x_M(n)$. However, due to the presence of noise and a non-ideal channel, these symbols will be distorted versions of the original ones.

5. At the exit of the FBMC demodulator (420) the M parallel symbols streams ($y_1(n),...,y_M(n)$) undergo a parallel to serial conversion at P/S converter (440) and the serial signal exiting therefrom is submitted to soft decoding at decoder (450).

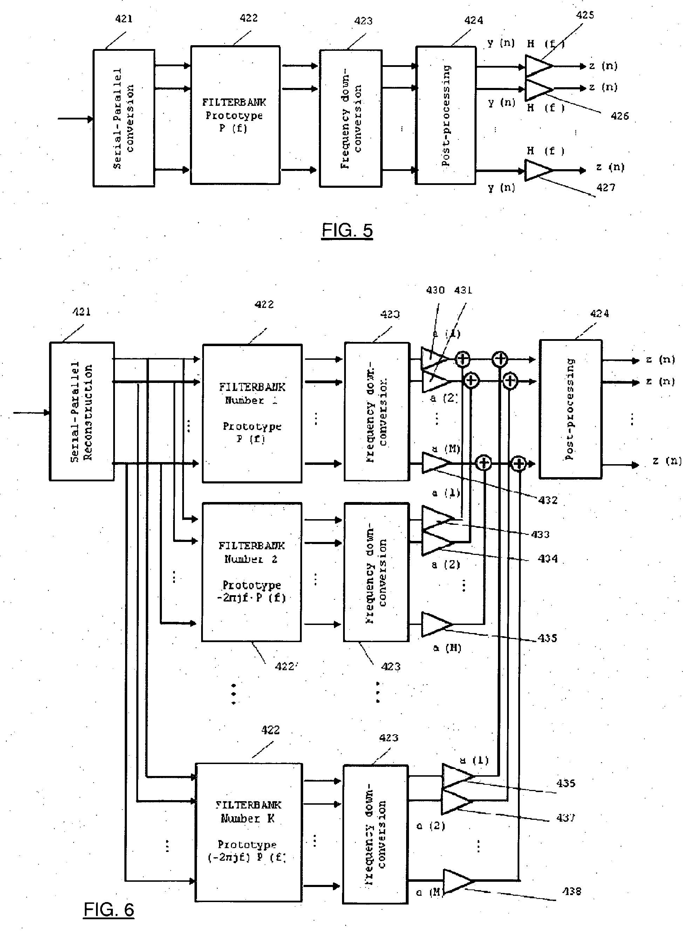

The structure of the FBMC modulator (140) and classical demodulator (420) are shown in Fig. 2 and Fig. 5 respectively. As shown in Fig. 2, the FBMC modulator (140) consists of the following blocks:

1. A pre-processing stage block (141), which prepares the input complex symbols ($x_1(n),...,x_M(n)$) for its frequency translation. For example, if OQAM modulation is employed, this stage would stagger the real and imaginary parts of the transmitted symbols in the time domain, which could then be multiplied by an appropriate complex weight, see also [P. Siohan, C. Siclet, and N. Lacaille, "Analysis and design of OFDM/OQAM systems based on filterbank theory", IEEE Transactions on Signal Processing, vol. 50, no. 5, pp. 1170-1183, May 2002].

2. A frequency translation operation block (142) that up-converts the samples at each of the M branches to a set of M distinct frequencies, denoted here as f1, f2,...,fM. This frequency translation operation block (142) is typically implemented with an IFFT operation.

3. A first filterbank (143) consisting of M parallel filters that implement the pulse shaping.

4. A network of reconstruction (144), basically consisting of delay and sum and decimation operations, which transform the signal into an appropriate stream to be transmitted.

There exist multiple options in the art in order to construct these different blocks (141, 142, 143, 144). In any case, the objective of the FBMC modulator is always the generation of a digital signal consisting of a linear combination of the input symbol streams ($x_1(n),...,x_M(n)$) such that the effective frequency response experimented by the $m^{th}$ bit stream is proportional to P(f-fn), where P(f) is a prototype response fixed by the system and fn is the frequency used for the up-conversion of the nth symbol stream in frequency translation operation block (142).

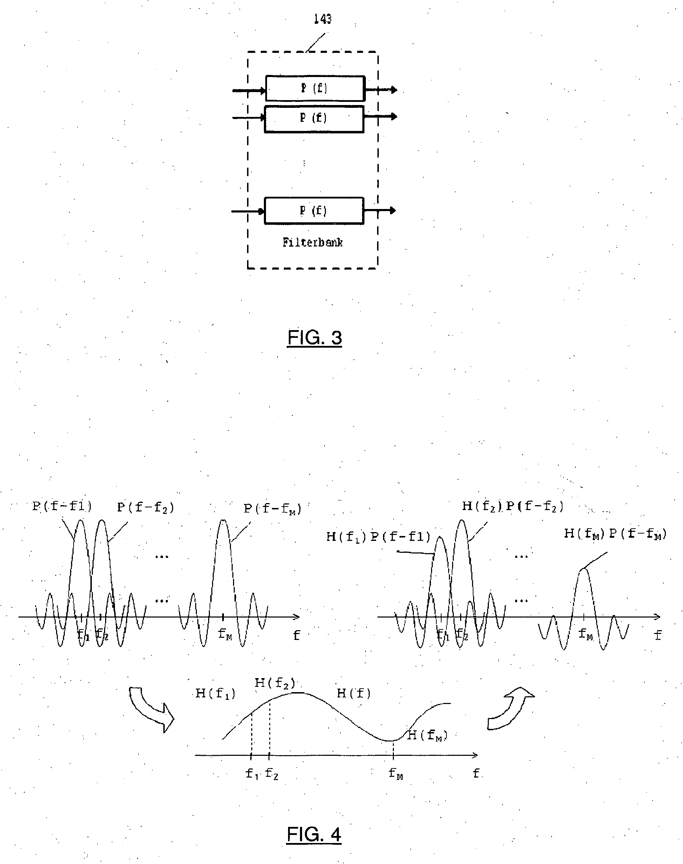

Fig. 3 shows the structure of the first filterbank (143), implemented from parallel set of filters $P_1(f)$, $P_2(f)$,... (143). Typically, the $k^{th}$ filter $P_k(f)$ is obtained as a decimated version of an original one -referred to as "prototype" in the art and denoted here by P(f)- after translation to the $k^{th}$ subcarrier frequency fk, that is $P_k(f)$ is a decimated version of P(f-fk). If OQAM modulations are used in (130), the decimation factor is usually equal to half of the number of subcarriers (M/2).

Fig. 4 represents the typical spectral response experimented by the multiple parallel symbol streams ($x_1(n),...,x_M(n)$) and measured at the output of the FBMC modulator (140). The $n^{th}$ symbol stream goes through a linear channel whose frequency response is proportional to P(f- fn), which is equal to a prototype frequency response P(f) centred at frequency f=fn.

Fig. 5 represents the typical structure of the FBMC demodulator (block 420). After a serial to parallel reconstruction stage at block 421 that basically implements the inverse of network of reconstruction block (144), a second filterbank (422) is implemented built up from a set of M parallel filters (hot shown). Each of these M parallel filters is essentially implementing the matched filter of the corresponding branch at the first filterbank (143). In other words, if $P_m(f)$ denotes the frequency response of the $m^{th}$ branch filter in the first filterbank (143), the corresponding filter in the $m^{th}$ branch of the second filterbank (422) has a frequency response proportional to $P_m^*(f)$, where (·)* denotes complex conjugate.

Following the said second filterbank (422), a frequency down-conversion module (423), typically implemented via an FFT/IFFT operation, converts the multiple symbol streams down to their baseband equivalents. The final post-processing stage (424) prepares the received samples for the equalizer, and basically inverts some of the operations made by the pre-processing stage (141). It should be pointed out that there exist computationally efficient ways of implementing FBMC demodulator (420), most notably the "polyphase implementation" constructed via FFT/IFFT as shown in [P. Siohan, C. Siclet, and N. Lacaille, "Analysis and design of OFDM/OQAM systems based on filterbank theory", IEEE Transactions on Signal Processing, vol. 50, no. 5, pp. 1170-1183, May 2002].

The prototype frequency response P(f) is typically designed so that the concatenation of the FBMC modulator (140) followed by the FBMC demodulator (420) produces no distortion or cross-talk between the M different branches of the system. In other words, the filter frequency responses Pm(f), m=1,...,M, are implemented to make sure that in the presence of an ideal distortion-free channel in the transmission media (200), the output signals $y_1(n),...,y_M(n)$ are proportional to the input ones $x_1(n),...,x_M(n)$. These are usually referred to as perfect reconstruction conditions. When P(f) is even and real-valued and M is an even number, a universal set of reconstruction conditions can be derived for multiple types of filterbank modulations (such as Cosine filterbank modulations [T.Q. Nguyen, R.D. Koilpillai, "The theory and design of arbitrary-length cosine-modulated filter banks and wavelets, satisfying perfect reconstruction" IEEE Transactions on Signal Processing, vol. 44, pp. 473-483, Mar. 1996], Modified DFT modulations [T. Karp, N.J. Fliege, "MDFT filter banks with perfect reconstruction", Proc. Of the IEEE International Symposium on Circuits and Systems, vol. 1, Seattle, WA, Apr. 1995, pp. 744-747] or OFDM/OQAM modulations [P. Siohan, C. Siclet, and N. Lacaille, "Analysis and design of OFDM/OQAM systems based on filterbank theory," IEEE Transactions on Signal Processing, vol. 50, no. 5, pp. 1170-1183, May 2002]). When the same prototype pulse is used at both sides of the communication system, the pulse is designed to present even symmetry and the decimation factor is half of the number of subcarriers (M/2), these conditions can be formulated as:

$$(1) \qquad P_m(f)\, P_m^*(-f) + P_{m+M/2}(f)\, P_{m+M/2}^*(-f) = 1\,, \quad m=1,\dots,M.$$

We will consider here that perfect reconstruction conditions are met, so that in the presence of an ideal, noiseless and distortion-free channel, the signals at the output of the FBMC demodulator (420) are proportional to those at the input of the FBMC modulator (140).

The situation is very different in the presence of a non-ideal frequency selective noisy channel. Let H(f) denote the channel frequency response of the transmission media (200). If the number of carriers M is sufficiently large and P(f) is sufficiently narrow in the frequency domain (see Fig. 4), we will approximately have

$$(2) \qquad P(f-f_m)\, P(f-f_k) \approx 0$$

for k#m. In this situation, the effect of the channel on each of the M parallel streams will approximately be equivalent to the multiplication by a complex weight, given by the channel response at the corresponding frequency. More specifically, we will approximately have

$$(3) \qquad y_m(n) \approx H(f_m)\, x_m(n) + w_m(n)$$

where $w_m(n)$ is a noise term caused by the transmission media (200). In this case, the equalizers (425) can be implemented in a very simple way via multiplication by the inverse of the corresponding coefficient, namely $H^{-1}(f_m)$. In other words, the output of the $m^{th}$ branch equalizer will be obtained by

$$(4) \qquad z_m(n) = H^{-1}(f_m)\, y_m(n) \approx x_m(n) + H^{-1}(f_m)\, w_m(n)$$

which is equal to the transmitted symbols $x_m(n)$ plus some noise term.

Unfortunately, the approximations in (2)-(3) only hold for very high M and very narrow P(f). In practice, we will have P(f-f_m)P(f-f_k) ≠0 and consequently the output of FBMC demodulator will approximately be equal to

$$(5) \qquad y_m(n) \approx H(f_m) x_m(n) + e_m(n) + w_m(n)$$

where $e_m(n)$ is an additional term that contains inter-symbol and inter-carrier interference, and that depends on the channel H(f) and the prototype P(f). This term will disappear when M increases to infinity, but in practice it will present a very high magnitude for moderate values of M, as it is the case in practical situations. In fact, the presence of this term has spurred a lot of research on alternative equalization systems that try to cancel out its contribution.

The proposed invention consists of a demodulator/equalizer architecture for FBMC modulations under frequency selective channels. The equalizer architecture consists of multiple parallel stages that are linearly combined on a per-subcarrier basis. The traditional single tap per-subcarrier equalizer is obtained as a special case of the proposed equalizer when the number of stages is fixed to one. Both stimulations and analytical predictions indicate that high performance gains can be obtained by simply complementing the traditional single tap per-subcarrier equalizer with an additional parallel stage, that is by using only K=2 stages.

The proposed demodulator-equalizer architecture is shown in Fig. 6. It corresponds to the block 420 in Fig. 1. The receiver architecture consists of K parallel stages, where K is a natural number. The traditional receiver in Fig. 5 corresponds to the case K=1, so in general we consider K>1. As in the conventional receiver, the incoming signal is passed through a serial-to-parallel converter (421), and the result is filtered by K second filterbanks (422, 422', 422") in parallel. Each second filterbank (422) is constructed using a different prototype filter. The first one of the second filterbanks (422) is constructed using the conjugate of the original prototype filter used at the transmitter in the frequency domain (P*(f)). The other second filterbanks (422') are constructed in the same way, but using the successive derivatives in the time domain of the original prototype pulse. Therefore, for example, the second one of the second filterbanks (422') is constructed using as prototype the filter -j2πfP*(f) in the frequency domain, where j is the imaginary unit. Similarly, the second filterbank (422") used in the $k^{th}$ parallel branch is constructed using the prototype (-j2πf)(k-1)P*(f).

After filtering by the K different second filterbanks (422, 422', 422"), the signal at each parallel branch is frequency down-converted (typically using a FFT operation), at down-converters (423). Afterwards, the signal is combined in a per-subcarrier basis using some coefficients that will be defined below. The result is then optionally post-processed at post-processor (424), which is exactly the same block that would be used in the conventional demodulator.

To combine the signals from the K different parallel stages, the proposed system uses some coefficients $a_k(m)$, k=1,...,K, m=1,...,M, so that the $m^{th}$ subcarrier in the $k^{th}$ parallel stage is multiplied by the coefficient $a_k(m)$. The coefficients used to combine the signals coming from the m subcarrier can be chosen recursively as follows: Initialization:

$$a_1(m) = \frac{1}{H(f_m)}$$ (as in the traditional per-subcarrier single tap equalizer) For k=2:K,

$$a_k(m) = -\frac{1}{H(f_m)} \sum_{r=0}^{k-1} \frac{(-j)^{k-r}}{(k-r)!} H^{(k-r)}(f_m) a_r(m)$$

Where $H^{(k)}(f_m)$ denotes the $k^{th}$ derivative of the channel (in the frequency domain) evaluated at the frequency $f_m$.

Table I presents a computational complexity assessment of the FBMC receiver (400) including several types of equalizers in terms of real-valued multiplications and additions, assuming that the number of carriers M is a power of two and that the polyphase implementation in [P. Siohan, C. Siclet, and N. Lacaille, "Analysis and design of OFDM/OQAM systems based on filterbank theory", IEEE Transactions on Signal Processing, vol. 50, no. 5, pp. 1170-1183, May 2002] is used to implement the receive filterbanks (422, 422', 422").

**Table I**

| Equalizer | Real-valued multiplications | Real-valued additions |
|---|---|---|
| Sinqle-tap per-subcarrier | M (log$_2$(M/2) + 2k + 2) + 4 | M (3log$_2$(M/2) + 2k) +.4 |
| Proposed (K> 1 stages) | M (log$_2$(M/2) + 2k + 2)K + 4K | M (3log$_2$(M/2) + 2k+2)K - 4M + 4K |
| FIR (Ntaps), per-subcarrier | M (log$_2$(M/2) + 2k +4Ntaps+ 2)K + 4 | M (3log$_2$(M/2) + 2k+4Ntaps-2)K +4 |
| FIR (Ntaps), multi-band (Nf bands) | M (log$_2$(M/2) + 2k +4Nf·Ntaps+ 2)K + 4 | M (3log$_2$(M/2) + 2k+4Nf·Ntaps-2)K + 4 |

Table 1 Computational complexity of the proposed algorithm under the polyphase implementation and comparison with classical techniques. Here k is the overlapping factor of the prototype pulse, defined as the quotient between its length in the time domain and the length of a multicarrier symbol, M is the number of subcarriers, and K the number of parallel stages of the proposed system.

These values can easily be derived by noticing that each FFT operation can be carried out with M(log$_2$(M/2)-2)+4 multiplications and 3M(log$_2$(M/2)-2)+4 additions, see further [P. Duhamel and M. Vetterli, "Fast Fourier transforms: A tutorial review and a state of the art", Signal Processing, vol. 19,pp. 259-299, 1990]. Apart from the single-tap per-subcarrier equalizer and the proposed equalizer (with K> 1 stages), Table I also includes the computational complexity corresponding to two standard equalization algorithms for FBMC modulations: a per-subcarrier equalizer that uses a finite impulse response (FIR) filter at each subcarrier, and a multi-band equalizer that processes Nf subcarriers with Nf FIR filters. In both cases, all the FIR filters were assumed to consist of a total of Ntaps complex coefficients. It is illustrated below that, according to Table I, the proposed equalization algorithm presents a much lower computational complexity for practical values of K, M, Ntaps, Nf.

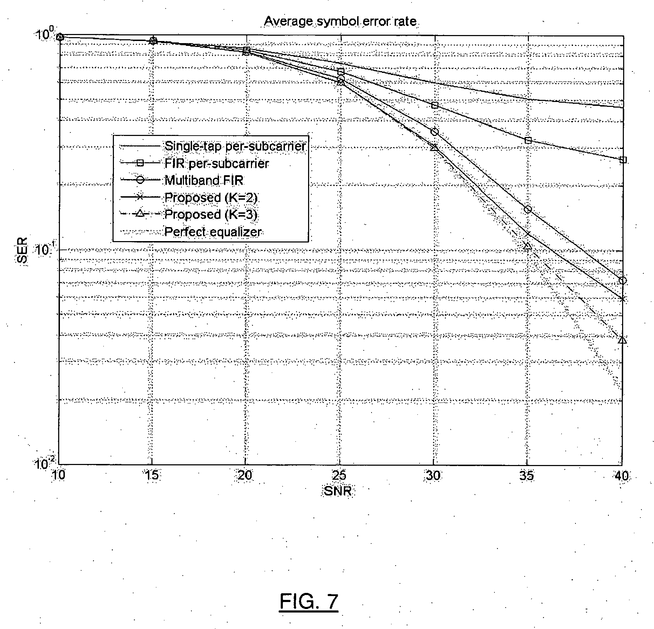

Fig. 7 represents the average symbol error rate that is achieved by different equalization systems in a filterbank multicarrier system with 256 carriers with prototype pulses having perfect reconstruction conditions and employing a 1024-QAM modulation at each subcarrier. The channel impulse response was randomly generated with a finite impulse response of 20 taps, having an exponentially decaying power delay profile (decaying constant equal to 0.3).

Apart from the performance of the proposed equalization method for different values of K (K=1,2,3, whereby K=1 corresponds to the single tap per-subcarrier equalizer, solid line with no markers), Fig. 7 also shows the performance of a complex FIR per-subcarrier equalizer with Ntaps = 8 coefficients (solid line with star markers), as well as the performance of a multi-band complex FIR that processes the two adjacent subcarriers, namely Ntaps = 8, Nf = 3 (solid line with circle markers). For the per-subcarrier FIR equalizer, the coefficients of the filters where chosen to perfectly equalize, a total of Ntaps equispaced points of the subcarrier frequency response. For the multi-band FIR equalizer, the coefficients were chosen so as to minimize the total distortion at the output of the equalizer, evaluated at Ntaps equispaced points of each subcarrier bandwidth. Observe that the propose method with K=2 (solid line with star markers) and K=3 (dash-dotted line with triangle markers) outperform both classical schemes and work very close to the perfect equalizer (dotted line with no markers).

It must be pointed out that, according to Table I, the computational complexity of the per-subcarrier FIR equalizer with Ntaps = 8 is approximately twice the complexity of the proposed approach with K = 2 stages in the total number of algebraic operations. The computational advantage is even higher in the case of the multi-band FIR equalization scheme, which needs a total number of operations approximately three times higher than those needed by the proposed scheme with K = 2 stages. From all this, it is concluded that the proposed equalization architecture represents a clear improvement with respect to standard approaches in terms of both better performance and lower computational complexity.

**Claims**

1. Method for equalizing filterbank based multicarrier modulations, comprising the steps of:

    a.- serial-to-parallel converting the received signal at a serial-to-parallel converter (421) into a first plurality (M) of parallel streams of subcarriers;
    b.- processing each subcarrier of the first plurality (M) of parallelized subcarrier signals by a plurality (K) of parallel filterbanks (422, 422', 422",...); and
    c.- weighting the output of said K parallel filterbanks with weights (430,431,...) in order to form a new set of M signals.

2. Method according to claim 1, wherein the said processing of the subcarrier signals is performed using a successive time-domain derivative of an original filter in each corresponding filterbank (422, 422', 422", ...), hereinafter referred to as "prototype".

3. Method according to claims 1 and 2, wherein the parallel filterbanks (422, 422', 422",...) are constructed using an approximation to the time-domain derivatives of the original prototype.

4. Method according to any preceding claim, wherein each filterbank (422', 422",...) is constructed using a polyphase network employing an FFT or IFFT operation.

5. Method according to claim 1, further comprising the step of further processing and/or equalizing the signals that result after combining the outputs of the K parallel filterbanks.

6. Method according to claim 5, where the equalization associated with a subcarrier consists of a filtering operation.

7. Method according to claim 5, where the equalization associated with a subcarrier consists of a single tap multiplication by an appropriate weight.

8. Method according to claim 5, where the equalization associated with a subcarrier consists of a single tap multiplication by the inverse of the channel frequency response at the subcarrier frequency.

9. Method according to claim 8, wherein the weights used to combine the output from the K parallel filterbanks (422, 422', 422",...) of the M signals in each one is fixed for one filterbank and is allocated a value defined by the expression:

$$a_k(m) = -\frac{1}{H(f_m)} \sum_{r=0}^{k-1} \frac{(-j)^{k-r}}{(k-r)!} H^{(k-r)}(f_m) a_r(m)$$

for the generic $k^{th}$ filterbank, wherein H(fm) denotes the channel frequency response at the $m^{th}$ subcarrier frequency, and $H^{(k)}$(fm) denotes the $k^{th}$ frequency domain derivative of the channel response at the $m^{th}$ subcarrier frequency.

10. Method according to claim. 9, wherein H(fm) and $H^{(k)}$(fm), k=1,...,K are replaced by estimations or approximations thereof.

11. Method according to claims 9 or 10, wherein the m subcarrier output of the kth filterbank is multiplied by the weight $a_k$(m), k=1,...,K, m=1,...,M, and where the resulting signals are added on a per-subcarrier basis.

12. Method according to any preceding claims, wherein the plurality (K) of parallel filterbanks is fixed beforehand according to the channel frequency response.

13. A computer program comprising computer program code means adapted to perform the steps of the method of claim 1 when said program is run on a computer, a digital signal processor, a field-programmable gate array, an application-specific integrated circuit, a micro-processor, a micro-controller, or any other form of programmable hardware.

**Patentansprüche**

1. Verfahren zum Angleichen von Filterbank-basierten Mehrträgermodulationen, das die folgenden Schritte umfasst:

a) Seriell-zu-Parallel-Wandeln des empfangenen Signals an einem Seriell-zu-Parallel-Wandler (421) in eine erste Vielzahl (M) von parallelen Strömen von Subträgern,
b) Verarbeiten jedes Subträgers aus der ersten Vielzahl (M) von parallelisierten Subträgersignalen durch eine Vielzahl (K) von parallelen Filterbänken (422, 422', 422", ...), und
c) Gewichten der Ausgabe der K parallelen Filterbänke mit Gewichten (430, 431, ...), um einen neuen Satz von M Signalen zu bilden.

2. Verfahren nach Anspruch 1, wobei die Verarbeitung der Subträgersignale unter Verwendung einer sukzessiven Zeitdomänen-Ableitung eines ursprünglichen Filters in jeder entsprechenden Filterbank (422, 422', 422", ...), der nachfolgend als "Prototyp" bezeichnet wird, durchgeführt wird.

3. Verfahren nach Anspruch 1 oder 2, wobei die parallelen Filterbänke (422, 422', 422", ...) unter Verwendung einer Näherung an die Zeitdomänen-Ableitungen des ursprünglichen Prototyps erstellt werden.

4. Verfahren nach einem der vorstehenden Ansprüche, wobei jede Filterbank (422, 422', 422", ...) unter Verwendung eines Mehrphasen-Netzwerks, das eine FFT- oder IFFT-Operation verwendet, erstellt wird.

5. Verfahren nach Anspruch 1, das weiterhin einen Schritt zum weiteren Verarbeiten und/oder Angleichen der Signale, die aus dem Kombinieren der Ausgaben der K parallelen Filterbänke resultieren, umfasst.

6. Verfahren nach Anspruch 5, wobei die mit einem Subträger assoziierte Angleichung aus einer Filteroperation besteht.

7. Verfahren nach Anspruch 5, wobei die mit einem Subträger assoziierte Angleichung aus einer einzelnen Tap-Multiplikation mit einem entsprechenden Gewicht besteht.

8. Verfahren nach Anspruch 5, wobei die mit einem Subträger assoziierte Angleichung aus einer einzelnen Tap-Multiplikation mit dem Kehrwert der Kanalfrequenzantwort bei der Subträgerfrequenz besteht.

9. Verfahren nach Anspruch 8, wobei die für das Kombinieren der Ausgabe aus den K parallelen Filterbänken (422, 422', 422", ...) der M Signale in jedem derselben verwendeten Gewichte für eine Filterbank fixiert sind und ihnen ein Wert zugewiesen wird, der durch die folgende Gleichung definiert wird:

$$a_k(m) = -\frac{1}{H(f_m)} \sum_{r=0}^{k-1} \frac{(-j)^{k-r}}{(k-r)!} H^{(k-r)}(f_m) a_r(m)$$

für die generische k-te Filterbank, wobei H(fm) die Kanalfrequenzantwort bei der m-ten Subträgerfrequenz wiedergibt und H$^{(k)}$(fm) die k-te Frequenzdomänen-Ableitung der Kanalantwort bei der m-ten Subträgerfrequenz wiedergibt.

10. Verfahren nach Anspruch 9, wobei H(fm) und H$^{(k)}$(fm), k=1, ..., K durch Schätzungen oder Näherungen ersetzt werden.

11. Verfahren nach Anspruch 9 oder 10, wobei die m Subträger-Ausgabe der k-ten Filterbank mit dem Gewicht a$_k$(m), k=1, ..., K, m=1, ..., M multipliziert wird und wobei die resultierenden Signale auf einer pro-Subträger-Basis addiert werden.

12. Verfahren nach einem der vorstehenden Ansprüche, wobei die Vielzahl (K) von parallelen Filterbänken zuvor in Übereinstimmung mit der Kanalfrequenzantwort fixiert wird.

13. Computerprogramm, das Computerprogrammcodemittel umfasst, die ausgebildet sind, um die Schritte des Verfahrens von Anspruch 1 auszuführen, wenn das Programm auf einem Computer, einen Digitalsignalprozessor, einem feldprogrammierbaren Gate-Array, einer anwendungsspezifischen integrierten Schaltung, einem Mikroprozessor, einem Mikrocontroller oder einer anderen Form von programmierbarer Hardware ausgeführt wird.

**Revendications**

1. Procédé d'égalisation de bancs de filtres sur la base de modulations de multiples porteuses, comprenant les étapes suivantes :

    a.- la conversion série parallèle du signal, reçu au niveau d'un convertisseur série parallèle (421), en une première pluralité (M) de flux parallèles de sous-porteuses ;
    b.- le traitement de chaque sous-porteuse de la première pluralité (M) de signaux de sous-porteuses mis en parallèle par une seconde pluralité (K) de bancs de filtres parallèles (422, 422', 422", ...) ; et
    c.- la pondération de la sortie desdits K bancs de filtres parallèles avec des pondérations (430, 431, ...) afin de former un nouvel ensemble de M signaux.

2. Procédé selon la revendication 1, dans lequel ledit traitement des signaux des sous-porteuses est réalisé à l'aide d'une dérivée successive dans le domaine temporel d'un filtre original dans chaque banc de filtres (422, 422', 422", ...), appelé ci-après « prototype ».

3. Procédé selon les revendications 1 et 2, dans lequel les bancs de filtres parallèles (422, 422', 422", ...) sont construits à l'aide d'une approximation à des dérivées dans le domaine temporel du prototype original.

4. Procédé selon l'une quelconque des revendications précédentes, dans lequel chaque banc de filtres (422', 422", ...) est construit à l'aide d'un réseau polyphase employant une opération d'une transformée FFT ou IFFT.

5. Procédé selon la revendication 1, comprenant en outre l'étape d'un autre traitement et/ou égalisation des signaux qui sont obtenus après la combinaison des sorties des K bancs de filtres parallèles.

6. Procédé selon la revendication 5, dans lequel l'égalisation associée à une sous-porteuse consiste en une opération de filtrage.

7. Procédé selon la revendication 5, dans lequel l'égalisation associée à une sous-porteuse consiste en une multiplication d'une seule entrée par une pondération appropriée.

8. Procédé selon la revendication 5, dans lequel l'égalisation associée à une sous-porteuse consiste en une multiplication d'une seule entrée par l'inverse de la réponse fréquentielle de canal à la fréquence de la sous-porteuse.

9. Procédé selon la revendication 8, dans lequel la pondération utilisée pour combiner la sortie des K bancs de filtres parallèles (422; 422', 422", ...) des M signaux en une sortie est fixe pour un banc de filtres et attribuée à une valeur définie par l'expression :

$$a_k(m) \;=\; -\frac{1}{H(f_m)} \sum_{r=0}^{k-1} \frac{(-j)^{k-r}}{(k-r)!} H^{(k-r)}(f_m)\, a_r(m)$$

pour le $k^{\text{ième}}$ banc de filtres générique, dans lequel $H(f_m)$ désigne la réponse fréquentielle de canal à la fréquence de la $m^{\text{ième}}$ sous-porteuse et $H^{(k)}(f_m)$ désigne la $k^{\text{ième}}$ dérivée dans le domaine fréquentiel de la réponse de canal à la fréquence de la $m^{\text{ième}}$ sous-porteuse.

10. Procédé selon la revendication 9, dans lequel $H(f_m)$ et $H^{(k)}(f_m)$, $k = 1, ..., K$ sont remplacées par leurs estimations ou leurs approximations.

11. Procédé selon les revendications 9 ou 10, dans lequel la sortie de la sous-porteuse m du $k^{\text{ième}}$ banc de filtres est multipliée par la pondération $a_k(m)$, $k = 1, ..., K$, $m = 1, ..., M$, et dans lequel les signaux résultants sont additionnés par sous-porteuse.

12. Procédé selon l'une quelconque des revendications précédentes, dans lequel la pluralité (K) de bancs de filtres parallèles est fixée auparavant selon la réponse fréquentielle de canal.

13. Programme d'ordinateur comprenant un moyen de code de programme d'ordinateur adapté pour réaliser les étapes du procédé selon la revendication 1 lorsque ledit programme est exécuté sur un ordinateur, un processeur de signaux numériques, un réseau de porte programmable, un circuit intégré à application spécifique, un microprocesseur, un microcontrôleur ou toute autre forme de matériel programmable.

FIG. 1

FIG. 2

## FIG. 3

## FIG. 4

13

FIG. 5

FIG. 6

FIG. 7

# EP 2 782 304 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **B. L. FLOCH ; M. ALARD ; C. BERROU.** Coded orthogonal frequency division multiple. *Proceedings of the IEEE,* 1995, vol. 83, 982-996
- **T. IHALAINEN ; T. H. STITZ ; M. RINNE ; M. RENFORS.** Channel equalization in filter bank based multicarrier modulation for wireless communications. *EURASIP Journal on Advances in Signal Processing,* 2007, vol. 2007, 1-18
- **H. LIN ; C. LELE ; P. SIOHAN.** Equalization with interference cancellation for hermitian symmetric OFDM/OQAM system. *Proceedings of the IEEE International Symposium on Power Line Communications and Its Applications, ISPLC,* 2008, 363-368
- **L. BALTAR ; D. WALDHAUSER ; J. NOSSEK.** MMSE subchannel decision feedback equalization for filter bank based multicarrier system. *Proceedings of the IEEE International Symposium on Circuits and Systems, ISCAS 2009,* 2009, 2802-2805
- **P. SIOHAN ; C. SICLET ; N. LACAILLE.** Analysis and design of OFDM/OQAM systems based on filterbank theory. *IEEE Transactions on Signal Processing,* May 2002, vol. 50 (5), 1170-1183
- **S. SANDBERG ; M. TZANNES.** Overlapped discrete multitone modulation for high speed copper wire communications. *IEEE Journal on Selected Areas in Communications,* December 1995, vol. 13 (9), 1571-1585
- **T.WIEGAND ; N. FLIEGE.** Equalizers for transmultiolexers in orthogonal multiple carrier data transmission. *Proceedings of the European Signal Processing Conference,* 1996
- **B. FARHANG-BOROUJENY ; L. LIN.** Analysis of post-combiner equalizers in cosine-modulated filterbank-based transmultiplexer systems. *IEEE Transactions on Signal Processing,* December 2003, vol. 51 (12), 3249-3262
- **L. VANDENDORPE ; L. CUVELIER ; F. DERYCK ; J. LOUVEAUX ; O. VAN DE WIEL.** Fractionally spaced linear and decision-feedback detectors for transmultiplexers. *IEEE Transactions on Signal Processing,* April 1998, vol. 46 (4), 996-1010
- **H. LIN ; C. LÉLÉ ; P. SIOHAN.** Equalization with interference cancellation for hermitian symmetric OFDM/OQAM systems. *Proceedings of the IEEE International Symposium on Power Line Communications and Its Applications,* 2008, 363-368
- **D. WALDHAUSER ; L. BALTAR ; J. NOSSEK.** MMSE subcarrier equalization for filter bank based multicarrier systems. *Proceedings of the IEEE 9th Workshop on Signal Processing Advances in Wireless Communications,* 2008, 525-529
- **L. BALTAR ; D. WALDHAUSER ; J. NOSSEK.** MMSE subchannel decision feedback equalization for filter bank based multicarrier systems. *Proceedings of the IEEE International Symposium on Circuits and Systems, ISCAS 2009,* 2802-2805
- **S. NEDIC ; N. POPOVIC.** Per-bin DFE for advanced OQAM-based multi-carrier wireless data transmission systems. *Proceedings of the International Zurich Seminar on Broadband Communications,* 2002, 38-1, 38-6
- **MAURICE BELLANGER.** FS-FBMC: An alternative scheme for filter bank based multicarrier transmission. *COMMUNICATIONS CONTROL AND SIGNAL PROCESSING (ISCCSP), 2012 5TH INTERNATIONAL SYMPOSIUM ON, IEEE,* 02 May 2012, 1-4
- **T.Q. NGUYEN ; R.D. KOILPILLAI.** The theory and design of arbitrary-length cosine-modulated filter banks and wavelets, satisfying perfect reconstruction. *IEEE Transactions on Signal Processing,* March 1996, vol. 44, 473-483
- **T. KARP ; N.J. FLIEGE.** MDFT filter banks with perfect reconstruction. *Proc. Of the IEEE International Symposium on Circuits and Systems,* April 1995, vol. 1, 744-747
- **P. DUHAMEL ; M. VETTERLI.** Fast Fourier transforms: A tutorial review and a state of the art. *Signal Processing,* 1990, vol. 19, 259-299